# EUROPÄISCHE PATENTANMELDUNG

(11) **EP 2 711 740 A1**
(43) Veröffentlichungstag der Anmeldung: **26.03.2014**
(21) Anmeldenummer: 13005873.8
(22) Anmeldetag: 01.02.2013
(51) Int. Cl.: G02B 1/04, B29D 11/00

(54) **Silikon-Kontaktlinse**

(30) Priorität: 01.02.2012 EP 12000660
(62) Teilanmeldung aus: 13702346.1
(71) Anmelder: LensWista AG, 12489 Berlin (DE)
(72) Erfinder: Görne, Martin, 22337 Hamburg (DE); Kordick, Thomas, 63773 Goldbach (DE)
(74) Vertreter: Diehl & Partner GbR

(57) **Zusammenfassung**

Eine Silikon-Kontaktlinse weist einen radialen Querschnitt der Innenfläche der Kontaktlinse auf, dessen Randbereichs-Kontur zwischen einem Wendepunkt und der Außenkante konvex ist. Zu ihrer Herstellung wird ein Silikon-Vorläufermaterial zwischen eine weibliche und eine männliche Form eingebracht und polymerisiert, und die polymerisierte Kontaktlinse wird mittels einer diese quellenden Flüssigkeit aus der Form ausgelöst und ohne Randbearbeitung fertiggestellt.

## Beschreibung

Die vorliegende Anmeldung bezieht sich auf eine *"weiche"* Kontaktlinse mit hervorragenden Trageeigenschaften.

Herkömmliche Kontaktlinsen, z. B. die aus der deutschen Gebrauchsmusterschrift G 87 10 765 U1 bekannte, weisen einen radial inneren Teil aus einem härteren, und einen radial äußeren Teil aus einem weicheren Material auf. Die Innenfläche ist vollständig konkav und die Außenfläche vollständig konvex, d. h. beide Flächen weisen eine positive Gauß'sche Krümmung auf. Diese bekannte Linse ist hinsichtlich ihres Tragekomforts nicht befriedigend.

Die Erfindung setzt sich zum Ziel, eine Kontaktlinse, die einen guten oder gar hervorragenden Tragekomfort aufweist, sowie ein Verfahren zu deren Herstellung bereitzustellen.

Dieses Problem wird gelöst durch eine Kontaktlinse aus Silikon, bei der ein radialer Querschnitt auf der Innenfläche einen Randbereich zwischen einem Wendepunkt und der Außenkante aufweist, in dem die Querschnittskontur konvex ist, insbesondere mit einem Radius zwischen 0,1 und 10 mm. Durch diese Randkontur gleitet die Linse besonders leicht auf den Tränenflüssigkeitsfilm auf.

Gemäß einem anderen Aspekt wird das Problem gelöst durch ein Verfahren, bei dem ein Silikon-Vorläufermaterial zwischen eine weibliche und eine männliche Form eingebracht und polymerisiert wird, und die polymerisierte Kontaktlinse mittels einer die Kontaktlinse quellenden Flüssigkeit aus der Form gelöst und ohne Randbeschneidung fertiggestellt wird. Dadurch wird das Auftreten einer Schnittkante, die als störend empfunden werden könnte, vermieden.

Weitere Merkmale der Erfindung ergeben sich aus der nachfolgenden Beschreibung von Ausführungsbeispielen in Verbindung mit den Ansprüchen sowie den Figuren. Die Erfindung ist nicht auf die beschriebenen Ausführungsbeispiele beschränkt, sondern durch den Umfang der beiliegenden Patentansprüche bestimmt. Bei der nachfolgenden Erläuterung von Ausführungsbeispielen wird auf die beiliegenden Figuren Bezug genommen, von denen
- Figur 1: eine schematische Querschnitts-Darstellung einer auf der Hornhaut eines Auges angeordneten Kontaktlinse,
- Figur 2: eine schematische Ausschnittvergrößerung eines Rand-bereichs der Kontaktlinse aus Figur 1,
- Figur 3: eine elektronenmikroskopische Aufnahme des Randbereichs der Kontaktlinse,
- Figur 4: ein Flussdiagramm für ein Herstellungsverfahren der erfindungsgemäßen Kontaktlinse, und
- Figur 5: eine Querschnitts-Ansicht einer zur Herstellung nach Figur 4 geeigneten Molding-Vorrichtung zeigt.

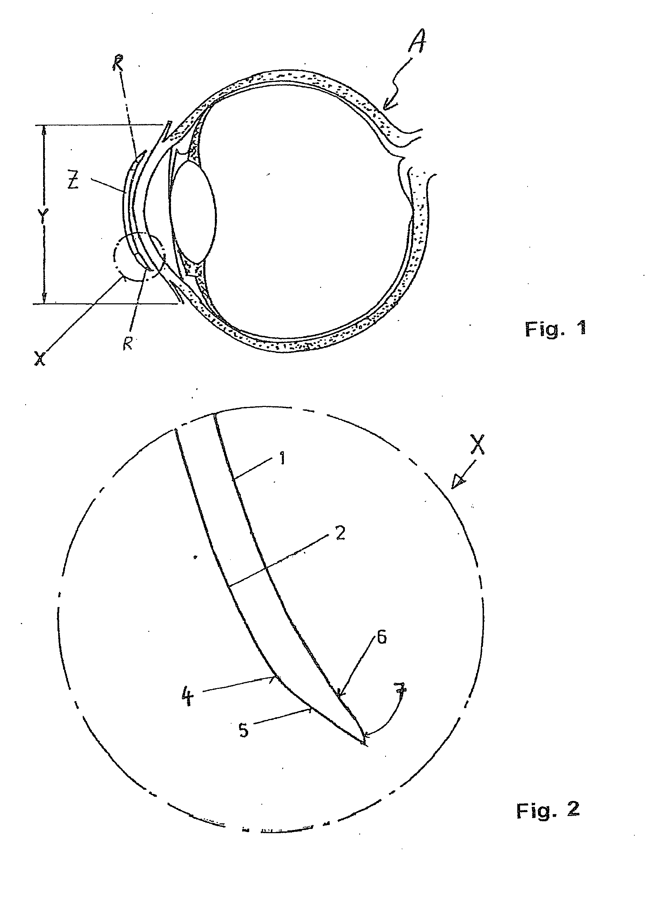

Die allgemeine Form einer Kontaktlinse ist in den Figuren 1 und 2 dargestellt: Die der Hornhaut zugewandte, in Benutzung auf einem Tränenflüssigkeitsfilm schwimmende Innenfläche 1 ist im zentralen Bereich Z konkav, und zwar rotationssymmetrischasphärisch mit einer Konuskonstanten von etwa -0.1 bis -0.5, also etwas elliptisch zugespitzt. Prinzipiell kann diese Fläche aber auch von der Rotationssymmetrie abweichen, wenn die physiologischen Bedingungen das erfordern. Die Außenfläche 2 der Linse ist naturgemäß konvex mit einem betragsmäßig etwas von jenem der Innenfläche abweichenden Radius, um die gewünschte dioptrische Wirkung bereitzustellen. Im Außenrandbereich R weichen die Krümmungen bzw. Radien von den zentralen Werten in folgender Weise ab: Auf der Außenfläche schließt sich radial an den zentralen Bereich ein ringförmiger Bereich 4 mit stärkerer (Einwärts-)Krümmung, also kleinerem Radius an. An diesen kann sich außen ein wiederum schwächer gekrümmter, sogar konischer (also ungekrümmter) oder geringfügig auswärts (also negativ) gekrümmter Bereich 5 anschließen. Betragsmäßig ist hier die Krümmung aber immer kleiner (d. h. der Radius größer) als in dem erstgenannten Übergangsbereich 4, d. h. die Linse läuft glatt aus.

Die Innenfläche 1 weist radial an den zentralen Bereich mit der elliptischen Fläche anschließend ebenfalls einen ringförmiger Bereich auf, der aber geringer gekrümmt, also flacher ist, was einem größeren Krümmungsradius in diesem Bereich entspricht. Hier ist der Krümmungsradius in einer Schnittebene gemeint, die die optische Achse der Linse enthält. Die von den Innenfläche und der Schnittebene gebildete Linie durchläuft einen Wendepunkt 6, d. h. die Krümmung der Linie wird zunächst Null und dann positiv. Für die Gauß'sche Flächenkrümmung bedeutet dies einen Wechsel zu negativen Werten. An diesen Bereich schließt sich dann der Bereich 7 an, wo die Innenfläche der Kontaktlinse sich an die globale Tangentialebene anschmiegt; hier ist dann die Krümmung in der zur radialen Schnittebene senkrechten Hauptkrümmungsebene Null, so dass die Gauß'sche Flächenkrümmung Null wird und noch weiter außen im unmittelbaren Kantenbereich wieder nach positiv wechselt.

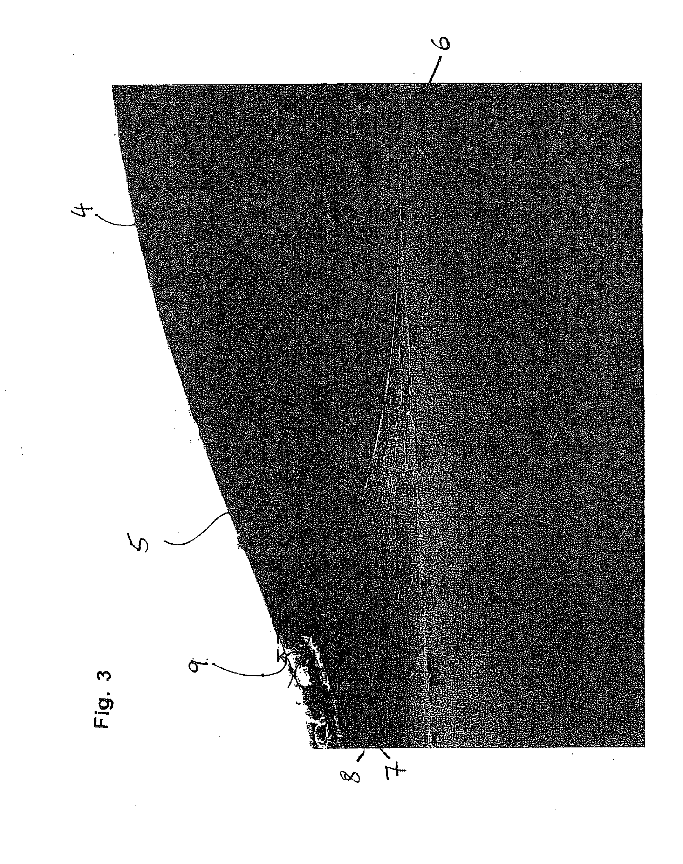

Zwischen diesen beiden Krümmungswechselpunkten 6 und 7 (in der Schnittebene) bzw. -linien (auf der Oberfläche) liegt ein Bereich, in welchem sich die Kontaktlinse allmählich, von radial innen nach außen betrachtet, von der Hornhaut abhebt. Dieser Bereich ist für den Tragekomfort ausschlaggebend. Wie die Erfinder erkannt haben, sollte in diesem Bereich weder eine allzu scharfe Kante ausgebildet sein, die den auf der Hornhaut befindlichen Tränenflüssigkeitsfilm unterbrechen oder gar in die Hornhaut einschneiden könnte; noch sollte der Randbereich eine nach auswärts vorspringende, stark gekrümmte Kante *("Skispitzen-Profil")* aufweisen, die das beim Lidschlag von außen aufgleitende Augenlid irritieren könnte. Vielmehr wird durch die erfindungsgemäß sanft auf einen schnittkantenfreien Außenrand zu laufenden ringförmigen Bereiche (siehe Figur 2) erreicht, dass ein störungsfreies Aufgleiten der Kontaktlinse auf den Tränenflüssigkeitsfilm und gleichzeitig ein störungsfreies Aufgleiten des Augenlids auf die Kontaktlinse ermöglicht ist. Es wurde gefunden, dass der Radius der Innenfläche, also die inverse Krümmung, entlang der radialen Schnittfläche, beispielsweise zwischen 0,1 und 4 mm liegen kann, oder auch einerseits über 0,5 mm oder/und andererseits unter 2 mm. Die radiale Ausdehnung des negativ gekrümmten Flächenbereichs kann 1 µm bis 1 mm betragen, zum Beispiel einerseits über 10 µm oder/und andererseits unter 100 µm. Die Außenkante selbst kann statt eines spitzen Winkels 8 zwei stumpfe aufweisen, zwischen denen sich ein z. B. 10-30 µm messender annähernd zylindrischer Außenrandbereich 9 erstreckt, wie dies in Figur 3 zu erkennen ist.

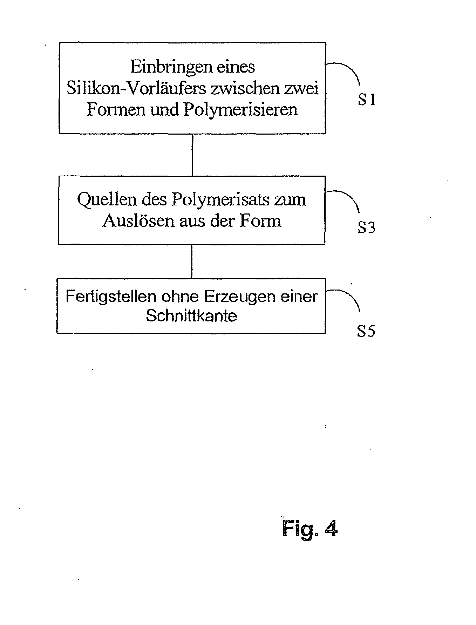

In Figur 4 ist ein Flussdiagramm eines erfindungsgemäßen Verfahrens dargestellt. Zunächst werden eine weibliche und eine männliche Form bereitgestellt, und ein Vorläufermaterial für Poly(dimethylsiloxan) wird in die weibliche Form eingebracht, mit dem männlichen Teil verschlossen und bei einer Temperatur zwischen 15°C-160°C für eine Dauer von 12-720 Minuten polymerisiert S1 (molding). Nach dem Verschließen werden die beiden Formteile gegeneinander um 180° oder einen anderen hinreichend großen Winkel (>20°) verdreht, solange die Reaktionsmischung gerade noch viskos ist (über 1000 cP; typisch ca. 4000 cP), so dass überschüssiges Silikon zuverlässig abgetrennt und in den Ringraum zwischen den Formteilen verdrängt wird. Bei dieser Abschnürung wird durch Einfluss der Oberflächenspannung auch die oben beschriebene Randkontur erzeugt, die den Verzicht auf eine Randbeschneidung oder andere Randbearbeitung, die eine Schnittkante erzeugt (z.B. Stanzen), ermöglicht. Zum Demolden wird die Kontaktlinse mit einem Alkan wie z. B. Hexan oder einem anderen unpolaren oder wenig polaren Lösungsmittel angequollen S3, so dass sie sich S5 ohne mechanische Einwirkung aus der Molding-Form und von den Herstellungsteilen löst. Das Dipolmoment des Lösungsmittels sollte dazu nicht mehr als 0,2 Debye betragen. Zur Unterstützung kann ein Ultraschallbad eingesetzt werden. Das Ausgangsmaterial kann ein flüssiges 2-Komponenten-Silikon von NuSil mit einem DK-Wert von über 700 barrer sein. Gewünschtenfalls wird die Linse nach Ausdampfen des Lösungsmittels im Vakuum bei über 120°C dampfsterilisiert.

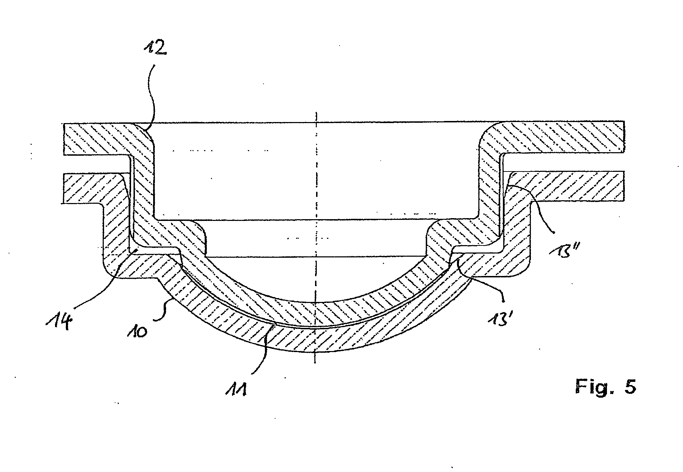

In Figur 5 ist eine zweiteilige Molding-Form gezeigt, die zur Durchführung des oben beschriebenen Verfahren geeignet ist. Der untere, weibliche Teil 10 nimmt dabei zunächst die Reaktionsmischung auf und wird dann mit dem oberen, männlichen Teil 12 verschlossen, wobei ein mit der Reaktionsmischung gefüllter Raum 11 zwischen ihnen verbleibt. Der untere Teil 10 weist Formschrägen 13', 13" auf, die das Zusammenfügen und das Voneinander-Trennen der Formteile 10 und 12 erleichtern. Der Ringraum ist mit 14 bezeichnet.

Aus dem Verfahrensablauf ergibt sich eine Irregularität des Außenrandes insofern, als er von einer exakten Kreislinie abweicht, anders als dies z. B. von gestanzten Linsenkonturen bekannt ist. Da auch die Hornhaut niemals genau reguläre Kontur hat, ist diese Abweichung von einer Idealgestalt nicht nur nicht nachteilig, sondern hat sogar günstige Auswirkungen auf den Tragekomfort. Das Ausmaß der Irregularität kann dadurch quantifiziert werden, dass man der Projektion des Außenrandes rechnerisch, nach dem Kriterium der minimalen Abweichungsquadratsumme, eine ideal annähernde Kreisform zuordnet. Das mittlere Abweichungsquadrat ist dann ein Maß für die Irregularität, und beträgt mindestens 5000 µm² (umgerechnet auf Beträge: etwa 1 % des halben Linsendurchmessers), kann aber in Ausführungsformen auch mehr als 1000 µm² oder mehr als 10000 µm² betragen.

Die erfindungsgemäß ausgebildete Kontaktlinse kann als Verbandlinse Verwendung finden, d.h. mit oder ohne Brechkraft zum physikalischen Schutz der Hornhaut vor Irritationen. Dies kann als flankierende, an sich nicht-therapeutische Maßnahme bei einer medizinisch-therapeutischen Augenbehandlung nützlich sein.

In den nachfolgenden Ansprüchen wird unter einem *"überwiegenden Bestehen"* ein massemäßiger Anteil von mehr als 50 % verstanden, im Besonderen von über 90 % bis zur Gänze. Unter *"Krümmung"* ist jeweils der inverse Krümmungsradius, d. h. des Radius des Schmiegekreises zu verstehen, wobei das Vorzeichen bei konvexen Flächen positiv und bei konkaven Flächen negativ ist. Die Gauß'sche Flächenkrümmung ist das Produkt der beiden Hauptkrümmungen, also dann negativ, wenn die beiden Hauptkrümmungen unterschiedliche Vorzeichen aufweisen (Sattelfläche), und dann Null, wenn eine oder beide Hauptkrümmungen Null sind (z. B. Zylinder- und Konusfläche).

Der Fachmann wird erkennen, dass Abweichungen von den oben beschriebenen Ausführungsformen möglich sind, ohne den Schutzbereich der beigefügten Ansprüche zu verlassen.

Unter anderem offenbart die vorliegende Anmeldung auch ein Verfahren zur Herstellung einer Silikon-Kontaktlinse, deren radialer Querschnitt auf der Innenfläche der Kontaktlinse einen Randbereich zwischen einem Wendepunkt und der Außenkante aufweist, in dem die Querschnittskontur konvex ist, bei welchem Verfahren ein weiblicher Formteil und ein männlicher Formteil bereitgestellt werden, und ein Silikon-Vorläufermaterial zwischen die Formteile eingebracht und dort polymerisiert wird, bei dem die polymerisierte Kontaktlinse mittels einer die Kontaktlinse quellenden Flüssigkeit aus der Form gelöst und ohne Erzeugung einer Schnittkante fertiggestellt wird.

## Patentansprüche

1. Silikon-Kontaktlinse, wobei ein radialer Querschnitt der Kontaktlinse auf der Innenfläche der Kontaktlinse einen Randbereich zwischen einem Wendepunkt und der Außenkante aufweist, in dem die Querschnittskontur konvex ist,
**dadurch gekennzeichnet, dass**
der Radius der konvexen Querschnittskontur über 0,5 mm beträgt.

2. Kontaktlinse nach Anspruch 1, wobei das Silikon Poly (dimethylsiloxan) ist.

3. Kontaktlinse nach Anspruch 1 oder 2, wobei der Randbereich der Kontaktlinse 1 µm bis 1 mm breit ist.

4. Kontaktlinse nach Anspruch 3, wobei der Randbereich der Kontaktlinse 0,01 mm bis 0,1 mm breit ist.

5. Kontaktlinse nach einem der vorstehenden Ansprüche, wobei der Außenrand der Kontaktlinse eine Irregularität aufweist, derart, dass eine dem Außenrand nach dem Kriterium des geringsten mittleren Abweichungsquadrat zugeordnete Kreislinie ein mittleres Abweichungsquadrat von mindestens 5000 µm² aufweist.

6. Kontaktlinse nach einem der vorstehenden Ansprüche, wobei der Radius der konvexen Querschnittskontur bis zu 10 mm beträgt.

7. Kontaktlinse nach einem der vorstehenden Ansprüche, wobei der Randbereich in einem Bereich der Innenfläche liegt, der eine negative Gauß'sche Flächenkrümmung hat.

8. Verwendung der Kontaktlinse nach einem der vorstehenden Ansprüche als Verbandlinse zum Schutz der Hornhaut.

9. Verfahren zur Herstellung der Silikon-Kontaktlinse nach einem der Ansprüche 1 bis 7, deren radialer Querschnitt auf der Innenfläche der Kontaktlinse einen Randbereich zwischen einem Wendepunkt und der Außenkante aufweist, in dem die Querschnittskontur konvex ist, bei welchem Verfahren ein weiblicher Formteil und ein männlicher Formteil bereitgestellt werden, und ein Silikon-Vorläufermaterial zwischen die Formteile eingebracht und dort polymerisiert wird,
**dadurch gekennzeichnet, dass**
die polymerisierte Kontaktlinse mittels einer die Kontaktlinse quellenden Flüssigkeit von den Formteilen gelöst und ohne Erzeugung einer Schnittkante fertiggestellt wird.

10. Verfahren nach Anspruch 9, wobei zum Auslösen der Kontaktlinse aus der Form eine unpolare Flüssigkeit eingesetzt wird.

11. Verfahren nach Anspruch 10, wobei das Dipolmoment der unpolaren Flüssigkeit weniger als 0,2 Debye beträgt.

12. Verfahren nach einem der Ansprüche 9 bis 11, wobei die ausgelöste Kontaktlinse mit einer polaren Flüssigkeit behandelt wird.

13. Verfahren nach Anspruch 12, wobei das Dipolmoment der polaren Flüssigkeit mehr als 1 Debye beträgt.

14. Verfahren nach einem der Ansprüche 9 bis 13, wobei bei noch flüssiger Reaktionsmischung die beiden Formteile gegeneinander rotiert werden, um den zur Bildung der Kontaktlinse vorgesehenen Teil der Reaktionsmischung von überschüssigem Material abzuschnüren.

15. Verfahren nach Anspruch 14, wobei die Formhälften um über 20° verdreht werden, wenn die Reaktionsmischung eine Viskosität von über 1000 cP aufweist.
